# EUROPEAN PATENT SPECIFICATION

(11) **EP 4 011 199 B1**
(45) Date of publication and mention of the grant of the patent: **03.07.2024**
(21) Application number: 21210965.6
(22) Date of filing: 29.11.2021
(51) Int. Cl.: A01G 25/09, A01G 25/16

(54) **SYSTEM FOR PROVIDING IRRIGATION SERVICE AND IRRIGATION METHOD**
SYSTEM ZUR BEREITSTELLUNG EINES BEWÄSSERUNGSDIENSTES UND VERFAHREN ZUR BEWÄSSERUNG
SYSTÈME DE FOURNITURE D'UN SERVICE D'IRRIGATION ET PROCÉDÉ D'IRRIGATION

(30) Priority: 08.12.2020 CN 202011442203
(43) Date of publication of application: 15.06.2022
(73) Proprietor: L'Air Liquide, société anonyme pour l'Étude et l'Exploitation des procédés Georges Claude, 75007 Paris (FR)
(72) Inventor: ZENG, Yan, Shanghai 201108 (CN); CHENG, Xu, Shanghai 201108 (CN)
(74) Representative: Air Liquide

(56) References cited:
- CN-A- 102 657 221
- CN-A- 107 125 102
- CN-A- 107 683 759

## Description

### Technical Field

The present invention belongs to the field of agriculture, and relates to a system for providing an irrigation service and an irrigation method, in particular to an integrated system for irrigating crop soil with nano-bubble water in a mobile fashion, to improve the water/fertilizer/gas environment in the crop root zone.

### Background Art

In recent years, China's hydrogen industry has developed rapidly, with ever increasing market demand. Hydrogen has various biological effects and is both safe and economical to use, and therefore has very broad prospects for application in agricultural production.

Hydrogen promotes the growth and development of plants in various ways. It has already been discovered in many types of study that hydrogen, as an important signal molecule, can promote the germination of seeds such as rye, mung beans and rice; for example, by using hydrogen-rich water to steep rice seeds, it is possible to alleviate the suppression of germination caused by salt stress. Root system development directly affects the absorption of nutrients and water by plants; hydrogen-rich water can promote the development of nepenthes, marigold and cucumber explant adventitious roots, effectively increasing the root system surface area, and significantly promote the growth of the root system of female ginseng, as well as increasing the yield of female ginseng. Hydrogen can counter stress suffered by crops due to excessively high concentration of heavy metals; for example, hydrogen-rich water can be used to alleviate the suppression of alfalfa growth by cadmium and aluminium. In addition, hydrogen can also increase the contents of anthocyanins and polyphenols in radish sprouts and strawberries.

In the prior art, hydrogen fumigation and hydrogen-rich water treatment, etc. are the main ways in which hydrogen is used in agriculture. It is feasible to use hydrogen-rich water to increase the hydrogen content and bring into play the biological effects of hydrogen. When it is necessary to use a small amount of hydrogen-rich water at the laboratory scale, hydrogen-rich water is often prepared by a method such as introducing a hydrogen-rich water stick or pure hydrogen into water; however, there is still relatively little research and development of dedicated agricultural hydrogen production devices, and existing devices struggle to meet the demands of open field production. For example, the Chinese invention patent "Hydrogen-rich liquid plant growth regulator and preparation method and use thereof, patent no. ZL201210154005.0, has disclosed introducing hydrogen directly into a nutrient liquid to obtain a plant growth regulator rich in hydrogen. That invention disclosed the preparation of hydrogen by a fermentation method, an electrolysis method, a chemical method and a cylinder, followed by the dissolution of hydrogen in water or a nutrient liquid, thereby producing the plant growth regulator rich in hydrogen. However, the dissolved hydrogen in hydrogen-rich water prepared by introducing hydrogen directly into water has a very short half-life, only about 1 hour, so the residence time of hydrogen in the hydrogen-rich plant growth regulator thus prepared is very short; after being prepared, the plant growth regulator must be used immediately, otherwise hydrogen will escape from the hydrogen-rich plant growth regulator. Such a method is obviously not suitable for actual situations in open field production, where watering is carried out over a large area and takes a lot of time. Hydrogen production by the fermentation method requires a fermentation tank or fermentation pool, and the fermentation process will often be accompanied by unpleasant odours as well as producing harmful by-products; moreover, in order to meet the need for large amounts of hydrogen in open field agriculture, the area of ground occupied by the fermentation tank or fermentation pool will be very large, so this method is likewise not suitable for open fields. Hydrogen preparation by the chemical method requires the addition of a hydrogen-producing material such as magnesium hydride to water; other substances such as magnesium ions are introduced at the same time as hydrogen is prepared, and because open field production requires highly concentrated hydrogen water on a large scale to bring into play the biological effects of hydrogen, hydrogen water preparation by the chemical method will consume large amounts of hydrogen-producing material, so the cost is high. More importantly, the use of large amounts of hydrogen-producing material such as magnesium hydride might give rise to problems such as metal ion stress in crops. Furthermore, even if feasible equipment is present, the power of electrolysis equipment needs to be very high, often 380 V or higher, in order to achieve the hydrogen pressure and concentration needed to prepare hydrogen water with nano-bubbles, and such electrical or energy conditions are difficult to achieve in remote areas.

In view of the above, in response to the problem that most irrigation and gas-adding devices are installed and arranged at different positions in a dispersed fashion, with a large area of ground being taken up and non-centralized operation, the present invention has researched and developed an integrated system for providing an irrigation service, thus guaranteeing an effective irrigation area for irrigation with micro- and nano-bubbles, and increasing the efficiency of irrigation.

### Summary of the Invention

To overcome the abovementioned technical problems in the prior art, the present invention provides an integrated system for providing an irrigation service, and an irrigation method.

The mobile integrated system in the present invention integrates a water pump, a gas cylinder and a nano-bubble generating apparatus; the water output can reach 1 t/h - 50 t/h, the gas concentration of nano-bubbles produced is in the range of 0 - 3 ppm, and the half-life can be as long as 12 hours. The system is suitable for greenhouses or open fields, especially in remote regions with poor electricity provision. The integrated system makes use of a means of transport such as a truck, so is easy to move and install. A control system therein can automatically adjust the flow rate and pressure of irrigation water and the gas cylinder, such that the concentration of nano-bubble gas is kept within a set value range. At the same time, the control system is connected to a control device, thus enabling remote mobile monitoring, so that the fields do not require too many people on site for supervision. The characteristic of being mobile enables the system to be supplied to multiple farms, thus increasing the rate of use, and considerably reducing the fixed investment cost to farms. Furthermore, the gas cylinders do not need to be stored on the farms, and this facilitates the centralized management of pressure equipment, so the dangers associated with improper storage or operation can be significantly reduced.

A first aspect of the present invention provides a system for providing an irrigation service; the system comprises a means of transport, a mobile apparatus and a soil moisture sensor, the mobile apparatus being removably configured in the means of transport, wherein the mobile apparatus comprises a nano-bubble generating apparatus, a gas cylinder, a control system, a water pump, a gas supply duct and an oxidation-reduction potential measuring element, a water outlet of the water pump being connected to a water inlet of the nano-bubble generating apparatus; the nano-bubble generating apparatus, gas cylinder, water pump and oxidation-reduction potential measuring element each being connected to the control system;
wherein :
- the soil moisture sensor is arranged in soil of a target crop in order to obtain a soil moisture, and sends the soil moisture to the control system, which is configured to control the power of the water pump according to the soil moisture received;
- the nano-bubble generating apparatus is connected to the gas cylinder via the gas supply duct, for the purpose of converting gas outputted from the gas cylinder to nano-bubbles, and dissolving the nano-bubbles in irrigation water, which is conveyed into the soil of the target crop via an irrigation pipeline;
- the gas cylinder is configured to supply a gas comprising H₂ the gas comprising optionally at least one of O₂ and CO₂;
- the oxidation-reduction potential measuring element is configured to detect a dissolved hydrogen concentration in irrigation water from the nano-bubble generating apparatus to the irrigation pipeline, and send the dissolved hydrogen concentration to the control system, which is configured to control the opening, closing or degree of opening of the gas cylinder according to the dissolved hydrogen concentration received.

In one embodiment, the control system is a programmable controller.

In one embodiment, an upper limit value of dissolved hydrogen concentration and a lower limit value of dissolved hydrogen concentration are pre-stored in the control system, which is configured to control the opening or turning-up of the gas cylinder when the oxidation-reduction potential measuring element detects that the dissolved hydrogen concentration is less than the lower limit value; or configured to control the closing or turning-down of the gas cylinder when the dissolved hydrogen concentration is detected to be greater than the upper limit value.

In one embodiment, the nano-bubble generating apparatus is provided with a water inlet and a water outlet, the water outlet of the nano-bubble generating apparatus being connected to the irrigation pipeline.

In one embodiment, a control panel connected to the control system is further configured in the mobile apparatus.

In one embodiment, the control panel is configured to display the volume, pressure and flow rate of gas in the gas cylinder, the pressure and flow rate at the water inlet and water outlet of the nano-bubble generating apparatus, the dissolved hydrogen concentration at the water outlet of the nano-bubble generating apparatus, and the power of the water pump.

In one embodiment, the control system comprises a valve control module, a gas cylinder control module, a nano-bubble generating apparatus control module and a water pump control module, wherein the valve control module is configured to control the opening, the degree of opening or the closing of each valve; the gas cylinder control module is connected to the gas cylinder, and configured to control the gas speed and pressure of gas outputted by the gas cylinder; the nano-bubble generating apparatus control module is connected to the nano-bubble generating apparatus, and configured to control a parameter of the nano-bubbles produced by the nano-bubble generating apparatus; and the water pump control module is configured to control the power of the water pump.

In one embodiment, the valve control system comprises a solenoid valve.

In one embodiment, the pressure of the gas supplied by the gas cylinder is in the range of 0.4 MPa - 20 MPa, preferably 13 MPa - 20 MPa, and more preferably 15 MPa - 18 MPa.

In one embodiment, the gas cylinder is a hydrogen cylinder.

In one embodiment, a flow rate at a water outlet of the nano-bubble generating apparatus is in the range of 1 t/h - 50 t/h.

In one embodiment, a nano-bubble flow meter is provided at the water outlet of the nano-bubble generating apparatus, for the purpose of detecting a gas flow rate value of nano-bubbles outputted by the nano-bubble generating apparatus, and sending the gas flow rate value to the control system.

In one embodiment, the gas concentration of nano-bubbles produced by the nano-bubble generating apparatus is in the range of 0 - 3 ppm.

In one embodiment, the mobile apparatus is fixed to the means of transport by bolts.

In one embodiment, the control system is connected to the control device via a remote wireless transmission system, thus enabling remote mobile monitoring. At the same time as controlling the irrigation water amount and the concentration of nano-bubble hydrogen, signals outputted by the control system can send to the control device in real time hydrogen pressure and flow rate values, flow rates at the water inlet and water outlet of the nano-bubble generating apparatus, soil moisture, the amount of gas remaining in the gas cylinder, etc.

A second aspect of the present invention provides an irrigation method, applied to the system for providing an irrigation service, and comprising the following steps:
(1) the soil moisture sensor obtaining soil moisture data and sending the soil moisture data to the control system, which controls the power of the water pump and the flow rate at the water outlet of the nano-bubble generating apparatus according to the soil moisture data received;
(2) switching on the water pump to feed irrigation water into the nano-bubble generating apparatus;
(3) connecting the nano-bubble generating apparatus to the hydrogen cylinder, converting hydrogen received from the hydrogen cylinder to nano-bubble hydrogen, and conveying nano-bubble hydrogen water into the soil of the target crop via the irrigation pipeline; the oxidation-reduction potential measuring element detecting the dissolved hydrogen concentration from the water outlet of the nano-bubble generating apparatus to the irrigation pipeline, and the control system being configured to control the opening, closing or degree of opening of the hydrogen cylinder according to the dissolved hydrogen concentration received;
(4) closing the gas cylinder and switching off the water pump once the soil moisture has reached a set value and/or the dissolved hydrogen concentration at the water outlet of the nano-bubble generating apparatus has reached a set value.

Compared with the prior art, the technical solution provided in the present invention has the following advantages:
1. In the system for providing an irrigation service according to the present invention, data relating to soil moisture and dissolved hydrogen concentration is outputted to the control system by the soil moisture sensor arranged in the soil and the oxidation-reduction potential measuring element at the nano-bubble generating apparatus; after performing logic operations, the control system outputs corresponding analogue signals or digital signals to adjust the gas flow rate and the irrigation water flow rate, until the desired soil moisture and dissolved hydrogen concentration are attained.
2. The gas cylinder (storage tank) can not only supply a single pure gas, but can also supply a mixture of multiple gases as required. Moreover, the problem of large amounts of electrical energy or energy being needed to prepare hydrogen or oxygen is solved; the electricity and voltage requirements are both very low, so the scope of application of the equipment is increased, and the system is especially suitable for remote regions with underdeveloped electricity systems. Furthermore, the gas cylinder (storage tank) can supply high-pressure gas (at about 15 MPa), helping to increase the solubility of the gas in the irrigation water, and the pressure and flow rate of the gas can also be changed more conveniently to control the solubility thereof in water.
3. The operation of the control system in the present invention reduces the professional skill requirements placed on the operator of the gas cylinder, and also reduces the specialist knowledge which farmers need to acquire in order to adjust the gas pressure and flow rate by themselves.
4. After modification, the means of transport can supply motive power to the water pump; moreover, a motive power system can be additionally installed behind the nano-bubble generating apparatus, to supply motive power to the water pump when the motive power from the means of transport is insufficient.
5. The integrated system is fixed to the truck removably (e.g. by bolts), and the mobile nature thereof increases the utilization rate thereof, thus significantly reducing the fixed investment cost.
6. The gas cylinder (storage tank) does not need to be stored at the farm, thus reducing the explosion risk associated with erroneous operation, etc.

### Brief description of the drawings

Further understanding of the advantages of the present invention can be gained through the following detailed description of the invention and accompanying drawings.
Fig. 1 is a structural schematic drawing of the system for providing an irrigation service in an embodiment of the present invention.
Fig. 2 is a top view of the system for providing an irrigation service in an embodiment of the present invention.
Fig. 3 is a control flow chart for the control system in an embodiment of the present invention.

### Detailed description of the invention

Specific embodiments of the present invention are explained in detail below in conjunction with the accompanying drawings. However, the present invention should be understood to not be limited to embodiments such as those described below, and the technical concept of the present invention may be implemented in combination with other well-known technologies or other technologies having the same function as those well-known technologies.

In the explanation of particular embodiments below, in order to clearly demonstrate the structure and manner of operation of the present invention, many directional words will be used for description, but words such as "front", "rear", "left", "right", "outer", "inner", "outward", "inward", "axial" and "radial" should be understood as being terms of convenience rather than defining words.

In the explanation of particular embodiments below, it must be understood that orientational or positional relationships indicated by terms such as "length", "width", "up", "down", "front", "rear", "left", "right", "vertical", "horizontal", "top", "bottom", "inner" and "outer" are based on the orientational or positional relationships shown in the drawings, and are merely intended to facilitate and simplify the description of the present invention, without indicating or implying that the apparatus or element referred to must have a specific orientation or be constructed and operated in a specific orientation, and therefore should not be understood as limiting the present invention.

In addition, the terms "first" and "second" are merely used for descriptive purposes, and must not be interpreted as indicating or implying relative importance or implicitly specifying the quantity of the technical feature indicated. Thus, features for which "first" and "second" are defined may explicitly or implicitly include one or more of said feature. In the description of the present invention, the meaning of "multiple" is two or more, unless clearly and specifically specified otherwise.

In the present invention, unless otherwise clearly specified and defined, terms such as "installed", "connected together", "connected" and "fixed" should be understood in a broad sense, e.g. may mean connected in a fixed manner, but may also mean removably connected, or forming a single piece; may mean mechanically connected, but may also mean electrically connected; may mean directly connected together, but may also mean connected indirectly via an intermediate medium; and may mean internal communication between two elements, or an interactive relationship between two elements. Those skilled in the art can understand the specific meaning of the above terms in the present invention according to the specific circumstances.

Unless clearly indicated otherwise, each aspect or embodiment defined here can be combined with any other aspect(s) or embodiment(s). In particular, any preferred or advantageous feature indicated can be combined with any other preferred or advantageous feature indicated.

In the following embodiments, the irrigation of crops with nano-bubble hydrogen water is taken as an example.

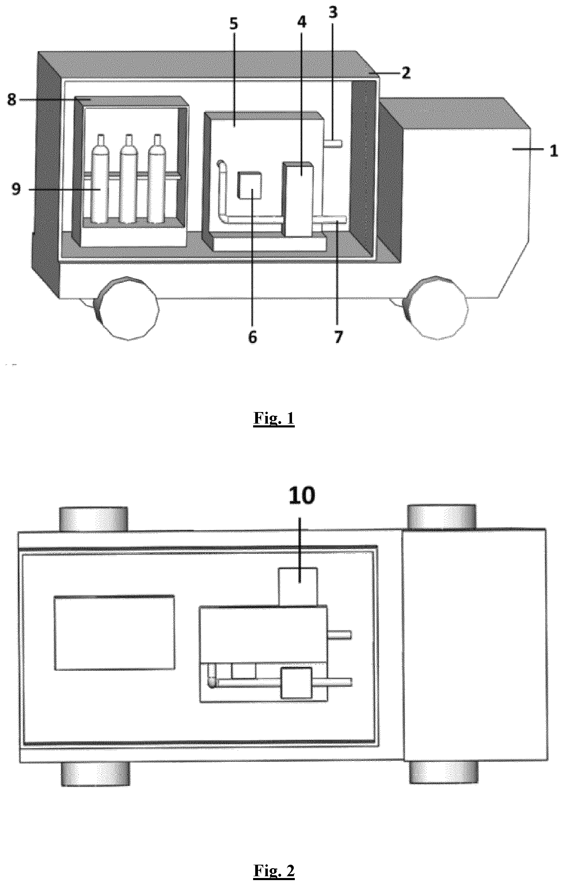

The aim of the system of the present invention for providing an irrigation service is to supply bubbles at the nanometre level to soil of target crops within a field environment. As shown in Fig. 1, a mobile apparatus may be configured to be transported by a means of transport or within the means of transport; means of transport include but are not limited to motorized vehicles such as trucks or tractors, and the mobile apparatus may be located on a mobile trailer configured on the motorized vehicle. The means of transport carries the mobile apparatus to the vicinity of the target crops to be treated. These crops have separate plant populations that can be treated simultaneously or separately according to the needs of the crops and the implementation solution. Nano-bubbles intended to be produced by means of a nano-bubble generating apparatus can be produced on the mobile apparatus and dispersed to crops via an irrigation pipeline.

Taking the preparation of nano-bubble hydrogen water by the nano-bubble generating apparatus in this embodiment as an example, the diameters of nano-bubble hydrogen are distributed across the range of 40 - 500 nm, and the average diameter can reach 294 nm; the half-life of nano-bubble hydrogen water prepared in this way can be as long as 12 hours.

In one embodiment of the present invention, taking a hydrogen cylinder as an example, the system comprises two parts: a means of transport 1 and a mobile apparatus 2, wherein the mobile apparatus 2 can be removably placed on the means of transport 1 by bolt connection, etc. A nano-bubble generating apparatus 5, a hydrogen cylinder 9, a support 8 for fixing the hydrogen cylinder, a water pump 4, a control system (not marked in the figures), a control panel 6, a gas supply duct and an oxidation-reduction potential measuring element are configured in the mobile apparatus 2.

The control panel 6 is connected to the control system, and there is no restriction on the specific type of the control system in the present invention; specific types include but are not limited to a programmable controller, which can be connected to a control device with processing functionality such as a smartphone, computer, Web server or data server. The control system is connected to the control device via a remote wireless transmission system (including but not limited to an RTU remote terminal control system or an IOT Internet of Things), thus enabling remote mobile monitoring.

A soil moisture sensor or soil moisture sensors is/are installed at one or more places in the soil of the target crops, in order to obtain soil moisture data for each place, and send the soil moisture data to the control system. The soil moisture sensor may be a GPRS tube-type soil moisture sensor, but is not limited to this. The control system is configured to control the power of the water pump and the flow rate and pressure at a water outlet of the nano-bubble generating apparatus, according to the soil moisture data received. At the same time, the control system can send the soil moisture data to the control device, which calculates the required hydrogen concentration and flow rate and pressure of hydrogen and irrigation water, etc. according to the soil moisture, crop attributes, the current growth stage of the crops, the planting area and the soil properties.

The oxidation-reduction potential (ORP) measuring element is installed at the water outlet of the nano-bubble generating apparatus, to monitor in real time the dissolved hydrogen concentration from the water outlet of the nano-bubble generating apparatus to the irrigation pipeline. The ORP value is a measurement index corresponding to the oxidation-reduction ability of a solution, and has the units of mV. The control system is configured to control the opening/closing and the degree of opening of a gas supply valve on the hydrogen cylinder, according to the dissolved hydrogen concentration received. The nano-bubble generating apparatus is connected to the hydrogen cylinder via the gas supply duct, for the purpose of converting hydrogen received from the hydrogen cylinder to nano-bubble hydrogen, and conveys nano-bubble hydrogen water into the soil of the target crops via the irrigation pipeline.

In this embodiment, an upper limit value of dissolved hydrogen concentration and a lower limit value of dissolved hydrogen concentration are pre-stored in the control system. After receiving the dissolved hydrogen concentration sent by the oxidation-reduction potential measuring element, the control system compares the real-time dissolved hydrogen concentration with the upper limit value and the lower limit value. If the dissolved hydrogen concentration at the water outlet of the nano-bubble generating apparatus is lower than the lower limit value, this indicates that the hydrogen concentration of nano-bubble hydrogen water conveyed into the crop soil is currently low, so the biological effect of hydrogen cannot be brought into play effectively; the control system will control the opening or turning-up of the gas supply valve (e.g. solenoid valve or pneumatic valve) on the hydrogen cylinder, in order to supply more hydrogen to the nano-bubble generating apparatus, and at the same time optionally control a valve on the irrigation pipeline to open, in order to perform irrigation subsequently. If the dissolved hydrogen concentration at the water outlet of the nano-bubble generating apparatus is higher than the upper limit value, the control system can control the closing or turning-down of the gas supply valve on the gas cylinder, in order to reduce the amount of hydrogen supplied.

In order to record the flow rate of nano-bubble hydrogen water produced by the nano-bubble generating apparatus, the mobile apparatus further comprises a nano-bubble hydrogen water flow meter, to detect a flow rate value of outputted nano-bubble hydrogen water, and send the flow rate value of nano-bubble hydrogen water to the control system. Thus, the control system can receive and store the flow rate value, in order to record relevant data in the growth process of the target crops.

In addition, in order to further ensure the stability of water pressure and water amount, the water pump 4 can be a variable-frequency pump, configured to control the water pressure and water amount of water used in the irrigation pipeline, such that the entire system automatically achieves a constant pressure and stabilizes at a set pressure value; i.e. when the amount of water used increases, the power increases and the water pump rotation speed increases; and when the amount of water used decreases, the power decreases and the water pump rotation speed decreases. In this way it is possible to ensure that there is adequate water pressure and water amount in the irrigation pipeline at all times.

As shown in Fig. 1, the nano-bubble generating apparatus 5 is provided with a water outlet 3, which water outlet 3 is connected to the irrigation pipeline used for irrigating the crops, in order to supply nano-bubble hydrogen water for irrigation. The water pump 4 comprises a water feed tube 7, for conveying irrigation water from a water source to the nano-bubble generating apparatus 5. As shown in Fig. 2, when necessary, for example when motive power of the means of transport is insufficient, a diesel engine or high-power battery 10 arranged behind the nano-bubble generating apparatus can supply motive power to the water pump 4.

In one embodiment, a modified truck can be used as the means of transport, in order to provide a stronger motive power system and fuel tank to supply motive power to the water pump 4.

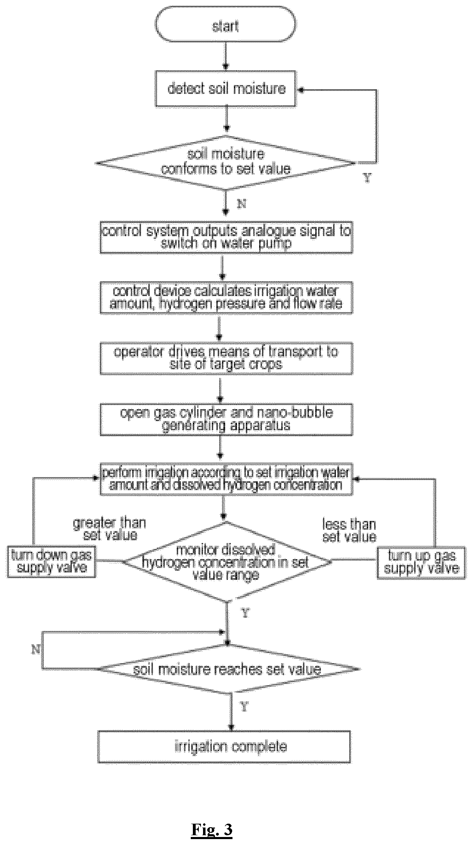

Fig. 3 shows a control flow chart for the control system in this embodiment. A GPRS tube-type soil moisture sensor is installed in a region of soil of the target crops. In the process of irrigation, analogue signals of the soil moisture sensor are inputted to the control system.

First of all, a judgement is made every day as to whether irrigation is needed, according to the soil moisture detected by the soil moisture sensor. When the soil moisture is higher than a set value, a water pump control module of the control system outputs an analogue signal to switch off the water pump, and at the same time can send the corresponding soil moisture to the control panel to display the soil moisture. When the soil moisture is lower than the set value of moisture required by the crops in the current stage, the water pump control module of the control system outputs an analogue signal to switch on the water pump, and the control device connected to the control system calculates the irrigation water amount, the hydrogen pressure and flow rate, and the upper limit value and lower limit value of dissolved hydrogen concentration, etc. according to the attributes of the target crops, the current growth stage, the planting area, the variety of the target crops, the properties of the soil and the hydrogen concentration required by the target crops.

Once an operator has driven the means of transport to transport the mobile apparatus to the site of the target crops, all that needs to be done is to connect the irrigation pipeline, open the valves of the gas cylinder and the nano-bubble generating apparatus, and turn on a power supply switch, and the system will then enter an irrigation mode. Based on received signals, the control system adjusts and controls the irrigation water amount, hydrogen pressure and flow rate, water pump power, and water inlet flow rate and pressure, etc., such that the dissolved hydrogen concentration at the water outlet of the nano-bubble generating apparatus is kept within the error range of ±5% of the set value. Moreover, when the soil moisture sensor detects that the soil moisture has reached the set value, the valves of the gas cylinder and water pump can be closed, and the corresponding power supply can be switched off, thus completing the current irrigation operation.

Those skilled in the art can set the control panel on the mobile apparatus to display the volume, pressure and flow rate of hydrogen in the hydrogen cylinder 9, the pressure and flow rate at the water inlet and water outlet of the nano-bubble generating apparatus, the dissolved hydrogen concentration at the water outlet of the nano-bubble generating apparatus, and the power of the water pump, etc., as required.

As an example, the various functions of the control system described above can be performed jointly by multiple control modules. For example, a valve control module is provided to control the opening, closing or degree of opening of each valve. A gas cylinder control module is provided to control the gas speed and pressure of gas outputted by the gas cylinder. A nano-bubble generating apparatus control module is provided, connected to the nano-bubble generating apparatus, for controlling parameters of the nano-bubbles produced by the nano-bubble generating apparatus. A water pump control module is provided, for controlling the power of the water pump, and adjusting the flow rate of irrigation water.

The embodiments of the present application that are described above are merely schematic; for example, the flow chart and block diagrams in the drawings show possible system architectures, functions and operations of the apparatus, method and computer program product according to embodiments of the present invention. On this point, each box in the flow chart or block diagrams may represent a part of a module, program segment or code, said part of the module, program segment or code comprising one or more executable instruction for implementing a specified logic function. It should also be noted that in some alternative embodiments, the functions marked in the boxes can also occur in a different order from that marked in the drawings. For example, two consecutive boxes can in fact be performed substantially in parallel, and can sometimes be performed in the opposite order, depending on the functions concerned. It should also be noted that each box in the block diagrams and/or flow chart, and combinations of boxes in the block diagrams and/or flow chart, can be implemented using a dedicated hardware-based system performing a specified function or action, or can be implemented using a combination of dedicated hardware and computer instructions.

Modifiers similar to "about" and "approximately" appearing in front of numerals herein generally include the number itself, and the specific meaning thereof should be understood in conjunction with the meaning of the context. Similarly, unless modified by a specific quantity measure word, nouns herein should be regarded as including both singular and plural forms, i.e. the technical solution may include a single one of the technical feature concerned, but may also include a plurality of the technical feature.

The above are merely preferred particular embodiments of the present invention, which are merely intended to illustrate the technical solution of the present invention without limiting the present invention. All technical solutions obtainable by those skilled in the art according to the concept of the present invention by logical analysis, reasoning or limited experiment should be included in the scope of the present invention which is defined in the appended claims.

## Claims

1. System for providing an irrigation service, **characterized in that** the system comprises a means of transport (1), a mobile apparatus (2) and a soil moisture sensor, the mobile apparatus being removably configured in the means of transport, wherein the mobile apparatus comprises a nano-bubble generating apparatus (5), a gas cylinder (9), a control system, a water pump (4), a gas supply duct and an oxidation-reduction potential measuring element, a water outlet (3) of the water pump being connected to a water inlet of the nano-bubble generating apparatus; the nano-bubble generating apparatus, gas cylinder, water pump and oxidation-reduction potential measuring element each being connected to the control system; wherein :
- the soil moisture sensor is arranged in soil of a target crop in order to obtain a soil moisture, and sends the soil moisture to the control system, which is configured to control the power of the water pump according to the soil moisture received;
- the nano-bubble generating apparatus is connected to the gas cylinder via the gas supply duct, for the purpose of converting gas outputted from the gas cylinder to nano-bubbles, and dissolving the nano-bubbles in irrigation water, which is conveyed into the soil of the target crop via an irrigation pipeline;
- the gas cylinder is configured to supply a gas comprising H₂ the gas comprising optionally at least one of O₂ and CO₂;
- the oxidation-reduction potential measuring element is configured to detect a dissolved hydrogen concentration in irrigation water from the nano-bubble generating apparatus to the irrigation pipeline, and send the dissolved hydrogen concentration to the control system, which is configured to control the opening, closing or degree of opening of the gas cylinder according to the dissolved hydrogen concentration received.

2. System according to Claim 1, **characterized in that** the pressure of the gas supplied by the gas cylinder is in the range of 0.4 MPa - 20 MPa, preferably 13 MPa - 20 MPa, and more preferably 15 MPa - 18 MPa.

3. System according to Claim 1, **characterized in that** the control system is a programmable controller.

4. System according to Claim 1, **characterized in that** an upper limit value of dissolved hydrogen concentration and a lower limit value of dissolved hydrogen concentration are pre-stored in the control system, which is configured to control the opening or turning-up of the gas cylinder when the oxidation-reduction potential measuring element detects that the dissolved hydrogen concentration is less than the lower limit value; or configured to control the closing or turning-down of the gas cylinder when the dissolved hydrogen concentration is detected to be greater than the upper limit value.

5. System according to Claim 1, **characterized in that** a flow rate at a water outlet of the nano-bubble generating apparatus is in the range of 1 t/h - 50 t/h.

6. System according to Claim 1, **characterized in that** the gas concentration of nano-bubbles produced by the nano-bubble generating apparatus is in the range of 0 - 3 ppm.

7. System according to Claim 1, **characterized in that** the gas cylinder is a hydrogen cylinder.

8. System according to Claim 1, **characterized in that** a control panel connected to the control system is further configured in the mobile apparatus.

9. System according to Claim 1, **characterized in that** the control system comprises a valve control module, a gas cylinder control module, a nano-bubble generating apparatus control module and a water pump control module, wherein the valve control module is configured to control the opening, the degree of opening or the closing of each valve; the gas cylinder control module is connected to the gas cylinder, and configured to control the gas speed and pressure of gas outputted by the gas cylinder; the nano-bubble generating apparatus control module is connected to the nano-bubble generating apparatus, and configured to control a parameter of the nano-bubbles produced by the nano-bubble generating apparatus; and the water pump control module is configured to control the power of the water pump.

10. Irrigation method, applied to the system according to any one of Claims 1 - 9, **characterized by** comprising the following steps:
(1) the soil moisture sensor obtaining soil moisture data and sending the soil moisture data to the control system, which controls the power of the water pump and the flow rate at the water outlet of the nano-bubble generating apparatus according to the soil moisture data received;
(2) switching on the water pump to feed irrigation water into the nano-bubble generating apparatus;
(3) connecting the nano-bubble generating apparatus to the hydrogen cylinder, converting hydrogen received from the hydrogen cylinder to nano-bubble hydrogen, and conveying nano-bubble hydrogen water into the soil of the target crop via the irrigation pipeline; the oxidation-reduction potential measuring element detecting the dissolved hydrogen concentration from the water outlet of the nano-bubble generating apparatus to the irrigation pipeline, and the control system being configured to control the opening, closing or degree of opening of the hydrogen cylinder according to the dissolved hydrogen concentration received;
(4) closing the gas cylinder and switching off the water pump once the soil moisture has reached a set value and/or the dissolved hydrogen concentration at the water outlet of the nano-bubble generating apparatus has reached a set value.

## Patentansprüche

1. System zum Bereitstellen eines Bewässerungsdienstes, **dadurch gekennzeichnet, dass** das System ein Transportmittel (1), eine mobile Einrichtung (2) und einen Bodenfeuchtigkeitssensor umfasst, wobei die mobile Einrichtung entfernbar in dem Transportmittel ausgebildet ist, wobei die mobile Einrichtung eine Nanoblasenerzeugungseinrichtung (5), einen Gaszylinder (9), ein Steuersystem, eine Wasserpumpe (4), einen Gaszufuhrkanal und ein Redoxpotenzialmesselement umfasst, wobei ein Wasserauslass (3) der Wasserpumpe mit einem Wassereinlass der Nanoblasenerzeugungseinrichtung verbunden ist; wobei die Nanoblasenerzeugungseinrichtung, der Gaszylinder, die Wasserpumpe und das Redoxpotenzialmesselement jeweils mit dem Steuersystem verbunden sind;
wobei:
- der Bodenfeuchtigkeitssensor in einem Boden eines Zielernteguts angeordnet ist, um eine Bodenfeuchtigkeit zu erhalten, und die Bodenfeuchtigkeit an das Steuersystem sendet, das dazu ausgebildet ist, die Leistung der Wasserpumpe gemäß der empfangenen Bodenfeuchtigkeit zu steuern;
- die Nanoblasenerzeugungseinrichtung über den Gaszufuhrkanal mit dem Gaszylinder zum Zweck eines Umwandelns von von dem Gaszylinder abgegebenem Gas in Nanoblasen und Lösen der Nanoblasen in Bewässerungswasser verbunden ist, das über eine Bewässerungsleitung in den Boden des Zielernteguts befördert wird;
- der Gaszylinder dazu ausgebildet ist, ein H₂ enthaltendes Gas zuzuführen, wobei das Gas optional mindestens eines von O₂ und CO₂ enthält;
- das Redoxpotenzialmesselement dazu ausgebildet ist, eine Konzentration an gelöstem Wasserstoff in Bewässerungswasser von der Nanoblasenerzeugungseinrichtung zu der Bewässerungsleitung zu detektieren und die Konzentration an gelöstem Wasserstoff an das Steuersystem zu senden, das dazu ausgebildet ist, das Öffnen, das Schließen oder den Öffnungsgrad des Gaszylinders gemäß der empfangenen Konzentration an gelöstem Wasserstoff zu steuern.

2. System nach Anspruch 1, **dadurch gekennzeichnet, dass** der Druck des durch den Gaszylinder zugeführten Gases im Bereich von 0,4 MPa - 20 MPa, bevorzugt 13 MPa - 20 MPa und stärker bevorzugt 15 MPa - 18 MPa liegt.

3. System nach Anspruch 1, **dadurch gekennzeichnet, dass** das Steuersystem eine programmierbare Steuerung ist.

4. System nach Anspruch 1, **dadurch gekennzeichnet, dass** ein oberer Grenzwert der Konzentration an gelöstem Wasserstoff und ein unterer Grenzwert der Konzentration an gelöstem Wasserstoff in dem Steuersystem vorgespeichert sind, das dazu ausgebildet ist, das Öffnen oder Aufdrehen des Gaszylinders zu steuern, wenn das Redoxpotenzialmesselement detektiert, dass die Konzentration an gelöstem Wasserstoff kleiner als der untere Grenzwert ist; oder dazu ausgebildet ist, das Schließen oder Abdrehen des Gaszylinders zu steuern, wenn detektiert wird, dass die Konzentration an gelöstem Wasserstoff größer als der obere Grenzwert ist.

5. System nach Anspruch 1, **dadurch gekennzeichnet, dass** eine Strömungsrate an einem Wasserauslass der Nanoblasenerzeugungseinrichtung im Bereich von 1 t/h - 50 t/h liegt.

6. System nach Anspruch 1, **dadurch gekennzeichnet, dass** die durch die Nanoblasenerzeugungseinrichtung erzeugte Konzentration an Nanoblasen des Gases im Bereich von 0 - 3 ppm liegt.

7. System nach Anspruch 1, **dadurch gekennzeichnet, dass** der Gaszylinder ein Wasserstoffzylinder ist.

8. System nach Anspruch 1, **dadurch gekennzeichnet, dass** ferner eine mit dem Steuersystem verbundene Steuertafel in der mobilen Einrichtung ausgebildet ist.

9. System nach Anspruch 1, **dadurch gekennzeichnet, dass** das Steuersystem ein Ventilsteuermodul, ein Gaszylindersteuermodul, ein Nanoblasenerzeugungseinrichtungssteuermodul und ein Wasserpumpensteuermodul umfasst, wobei das Ventilsteuermodul dazu ausgebildet ist, das Öffnen, den Öffnungsgrad oder das Schließen jedes Ventils zu steuern; wobei das Gaszylindersteuermodul mit dem Gaszylinder verbunden und dazu ausgebildet ist, die Gasgeschwindigkeit und den Druck von durch den Gaszylinder abgegebenem Gas zu steuern; wobei das Nanoblasenerzeugungseinrichtungssteuermodul mit der Nanoblasenerzeugungseinrichtung verbunden und dazu ausgebildet ist, einen Parameter der durch die Nanoblasenerzeugungseinrichtung erzeugten Nanoblasen zu steuern; und wobei das Wasserpumpensteuermodul dazu ausgebildet ist, die Leistung der Wasserpumpe zu steuern.

10. Bewässerungsverfahren, das auf das System nach einem der Ansprüche 1 - 9 angewendet wird, **dadurch gekennzeichnet, dass** es die folgenden Schritte umfasst:
(1) Erhalten von Bodenfeuchtigkeitsdaten durch den Bodenfeuchtigkeitssensor und Senden der Bodenfeuchtigkeitsdaten an das Steuersystem, das die Leistung der Wasserpumpe und die Strömungsrate an dem Wasserauslass der Nanoblasenerzeugungseinrichtung gemäß den empfangenen Bodenfeuchtigkeitsdaten steuert;
(2) Einschalten der Wasserpumpe zum Speisen von Bewässerungswasser in die Nanoblasenerzeugungseinrichtung;
(3) Verbinden der Nanoblasenerzeugungseinrichtung mit dem Wasserstoffzylinder, Umwandeln von von dem Wasserstoffzylinder empfangenem Wasserstoff in Nanoblasenwasserstoff und Befördern von Nanoblasenwasserstoffwasser über die Bewässerungsleitung in den Boden des Zielernteguts; wobei das Redoxpotenzialmesselement die Konzentration an gelöstem Wasserstoff von dem Wasserauslass der Nanoblasenerzeugungseinrichtung zu der Bewässerungsleitung detektiert und das Steuersystem dazu ausgebildet ist, das Öffnen, das Schließen oder den Öffnungsgrad des Wasserstoffzylinders gemäß der empfangenen Konzentration an gelöstem Wasserstoff zu steuern;
(4) Schließen des Gaszylinders und Ausschalten der Wasserpumpe, sobald die Bodenfeuchtigkeit einen Sollwert erreicht hat und/oder die Konzentration an gelöstem Wasserstoff an dem Wasserauslass der Nanoblasenerzeugungseinrichtung einen Sollwert erreicht hat.

## Revendications

1. Système permettant de fournir un service d'irrigation, **caractérisé en ce que** le système comprend un moyen de transport (1), un appareil mobile (2) et un capteur d'humidité du sol, l'appareil mobile étant placé de façon amovible dans le moyen de transport, dans lequel l'appareil mobile comprend un appareil de génération de nano-bulles (5), une bouteille de gaz (9), un système de commande, une pompe à eau (4), un conduit d'alimentation en gaz et un élément de mesure de potentiel d'oxydoréduction, une sortie d'eau (3) de la pompe à eau étant raccordée à une entrée d'eau de l'appareil de génération de nano-bulles ; l'appareil de génération de nano-bulles, la bouteille de gaz, la pompe à eau et l'élément de mesure de potentiel d'oxydoréduction étant chacun connectés au système de commande ;
dans lequel :
- le capteur d'humidité du sol est disposé dans le sol d'une culture cible afin d'obtenir une humidité du sol, et envoie l'humidité du sol au système de commande, qui est configuré pour commander l'alimentation de la pompe à eau en fonction de l'humidité du sol reçue ;
- l'appareil de génération de nano-bulles est relié à la bouteille de gaz par le biais du conduit d'alimentation en gaz, dans le but de convertir le gaz émis depuis la bouteille de gaz en nano-bulles, et de dissoudre les nano-bulles dans l'eau d'irrigation, qui est transportée dans le sol de la culture cible par le biais d'un tuyau d'irrigation ;
- la bouteille de gaz est conçue pour fournir un gaz comprenant du H₂, le gaz comprenant facultativement au moins l'un de l'O₂ et du CO₂ ;
- l'élément de mesure de potentiel d'oxydoréduction est configuré pour détecter une concentration en hydrogène dissous dans l'eau d'irrigation entre l'appareil de génération de nano-bulles et le tuyau d'irrigation, et envoyer la concentration en hydrogène dissous au système de commande, qui est configuré pour commander l'ouverture, la fermeture ou le degré d'ouverture de la bouteille de gaz en fonction de la concentration en hydrogène dissous reçue.

2. Système selon la revendication 1, **caractérisé en ce que** la pression du gaz fourni par la bouteille de gaz est comprise dans la plage de 0,4 MPa à 20 MPa, de préférence de 13 MPa à 20 MPa, et plus préférablement de 15 MPa à 18 MPa.

3. Système selon la revendication 1, **caractérisé en ce que** le système de commande est un contrôleur programmable.

4. Système selon la revendication 1, **caractérisé en ce qu'**une valeur limite supérieure de concentration en hydrogène dissous et une valeur limite inférieure de concentration en hydrogène dissous sont pré-stockées dans le système de commande, qui est configuré pour commander l'ouverture ou la sortie de la bouteille de gaz lorsque l'élément de mesure de potentiel d'oxydoréduction détecte que la concentration en hydrogène dissous est inférieure à la valeur limite inférieure ; ou configuré pour commander la fermeture ou la rentrée de la bouteille de gaz lorsque la concentration en hydrogène dissous est détectée comme étant supérieure à la valeur limite supérieure.

5. Système selon la revendication 1, **caractérisé en ce qu'**un débit à une sortie d'eau de l'appareil de génération de nano-bulles est compris dans la plage de 1 t/h à 50 t/h.

6. Système selon la revendication 1, **caractérisé en ce que** la concentration en gaz des nano-bulles produites par l'appareil de génération de nano-bulles est comprise dans la plage de 0 ppm à 3 ppm.

7. Système selon la revendication 1, **caractérisé en ce que** la bouteille de gaz est une bouteille à hydrogène.

8. Système selon la revendication 1, **caractérisé en ce qu'**un panneau de commande connecté au système de commande est en outre configuré dans l'appareil mobile.

9. Système selon la revendication 1, **caractérisé en ce que** le système de commande comprend un module de commande de vanne, un module de commande de bouteille de gaz, un module de commande d'appareil de génération de nano-bulles et un module de commande de pompe à eau, dans lequel le module de commande de vanne est configuré pour commander l'ouverture, le degré d'ouverture ou la fermeture de chaque vanne ; le module de commande de bouteille de gaz est connecté à la bouteille de gaz, et configuré pour commander la vitesse et la pression de gaz du gaz émis par la bouteille de gaz ; le module de commande d'appareil de génération de nano-bulles est connecté à l'appareil de génération de nano-bulles, et configuré pour commander un paramètre des nano-bulles produites par l'appareil de génération de nano-bulles ; et le module de commande de pompe à eau est configuré pour commander l'alimentation électrique de la pompe à eau.

10. Procédé d'irrigation, appliqué au système selon l'une quelconque des revendications 1 à 9, **caractérisé en ce qu'**il comprend les étapes suivantes :
(1) l'obtention par le capteur d'humidité du sol de données d'humidité du sol et l'envoi des données d'humidité du sol au système de commande, qui commande l'alimentation électrique de la pompe à eau et le débit à la sortie d'eau de l'appareil de génération de nano-bulles en fonction des données d'humidité du sol reçues ;
(2) la mise sous tension de la pompe à eau pour alimenter en eau d'irrigation l'appareil de génération de nano-bulles ;
(3) le raccordement de l'appareil de génération de nano-bulles à la bouteille d'hydrogène, la conversion de l'hydrogène reçu depuis la bouteille d'hydrogène en nano-bulles d'hydrogène, et le transport des nano-bulles d'hydrogène et d'eau dans le sol de la culture cible par le biais du tuyau d'irrigation ; la détection par l'élément de mesure de potentiel d'oxydoréduction de la concentration en hydrogène dissous entre la sortie d'eau de l'appareil de génération de nano-bulles et le tuyau d'irrigation, et le système de commande étant configuré pour commander l'ouverture, la fermeture ou le degré d'ouverture de la bouteille d'hydrogène en fonction de la concentration en hydrogène dissous ;
(4) la fermeture de la bouteille de gaz et la mise hors tension de la pompe à eau une fois que l'humidité du sol a atteint une valeur définie et/ou que la concentration en hydrogène dissous à la sortie d'eau de l'appareil de génération de nano-bulles a atteint une valeur définie.
